# EUROPÄISCHE PATENTSCHRIFT

(11) **EP 1 459 833 B1**
(45) Veröffentlichungstag und Bekanntmachung des Hinweises auf die Patenterteilung: **10.06.2009**
(21) Anmeldenummer: 04450064.3
(22) Anmeldetag: 15.03.2004
(51) Int. Cl.: B23K 20/12

(54) **Verfahren zum Verbinden der Stirnseiten von Teilen durch Reibschweissen**
Method of friction welding
Procédé de soudage par friction

(30) Priorität: 21.03.2003 AT 4552003
(43) Veröffentlichungstag der Anmeldung: 22.09.2004
(73) Patentinhaber: voestalpine Schienen GmbH, 8700 Leoben (AT)
(72) Erfinder: Pfeiler, Hans Ing., 8700 Leoben (AT)
(74) Vertreter: Wildhack & Jellinek

(56) Entgegenhaltungen:
- EP-A- 0 920 948
- DE-A- 19 807 457
- GB-A- 1 293 531
- GB-A- 1 324 431
- GB-A- 1 481 215
- US-A- 3 564 703
- US-A- 3 732 613
- US-B1- 6 357 506

## Beschreibung

Die Erfindung bezieht sich auf ein Verfahren zum Verbinden der Stirnseiten von Teilen mit großer Längserstreckung und mit profiliertem Querschnitt wie Schienen und dergleichen aus härtbaren Stählen und Legierungen durch Reibschweißen.

Ein Fügen durch Schweißen ist nach DIN 1910 **dadurch gekennzeichnet, dass** der Zusammenhalt der Teile durch Stoff Vereinigung unter Anwendung von Wärme und/oder Kraft erzielt wird. Die Trennfuge zwischen den Werkstücken wird durch metallische Bindung ihrer Werkstoffe beseitigt.

Beim Reibschweißen werden die zu verbindenden Flächen der Werkstücke oder Teile unter Druck relativ zueinander bewegt und durch die Reibung die Flächenbereiche erwärmt, worauf ein aneinander Anstellen bzw. Anpressen der Teile bei metallischer Bindung derselben erfolgt.

Mittels Reibschweißens können überwiegend rotationssymetrische Form aufweisende Teile miteinander verbunden oder an Werkstücken angebracht werden, wobei mindestens ein Teil um seine Achse gedreht, also relativ zum gegenüberliegenden bewegt und an ein weiteres Teil oder ein Werkstück unter Druck angestellt wird. Durch die an den Anstellflächen freiwerdende Reibungswärme erfolgt ein Aufwärmen der Flächenbereiche auf eine Temperatur, bei welcher der Teil-Werkstoff zu erweichen beginnt. Die eigentliche Verschweißung ergibt sich bei Ruhigstellung der/des Teile(s) und einem verstärkten Andrücken der Anstellflächen, einem sogenannten Stauchschlag, zum Erstellen einer sicheren metallischen Verbindung der Werkstoffe.

Reibschweißverbindungen und Einrichtungen zu deren Erstellung können für besondere Werkstoffe und ein wenig zeitaufwendiges Fügen von kleinen oder gedrungenen Teilen große Bedeutung und Wirtschaftlichkeit besitzen, bei Stäben und dergleichen mit großer Längserstreckung ist jedoch eine Drehbewegung derselben zur Reibungserwärmung der Verbindungsbereiche oft nur mit größtem Aufwand in vielen Fällen auch nur theoretisch möglich.

Insbesondere bei Langstäben mit profiliertem Querschnitt, wie beispielsweise Fahrschienen oder Profilträger, erscheint ein achsfluchtendes Fügen mit Ausrichtung des Querschnittsprofiles durch Reibschweißen nicht wirtschaftlich und nicht mit einer erforderlichen Verbindungsgüte herstellbar.

Aus der DE 198 07 457 A1 ist ein Verfahren zum Verbinden von Eisenbahnschienen durch Reibschweißen bekannt geworden, bei welchem ein Zwischenstück zwischen den zu verbindenden Schienenenden linear oder orbital oszillierend bewegt wird. Die beiden Schienenenden werden dabei in Schienenlängsrichtung zueinander an das Zwischenstück gepresst, um die zum Schweißen notwendige Wärme durch Reibenergie auf beiden Kontaktflächen zwischen je einem der Schienenenden und je einer Schnittfläche des Zwischenstückes aufzubringen.

Aus einer derartigen aufwendig herzustellenden Schienenverbindung resultieren jedoch jeweils zwei Schweißübergänge, die eine Vermehrung möglicher, gegebenenfalls umfangreich zu erprobender Schwachstellen ergeben. Weiters können eine Temperaturführung im Verbindungsbereich beim Reibschweißen und auch anlagentechnische Funktionsabläufe erschwert gütegesichert gesteuert werden.

Aus der GB 1 293 531 ist eine weitere Vorrichtung und ein Verfahren zum Verbinden der Stirnseiten durch Reibschweißen bekannt geworden. Danach kann eine orbitale Bewegung der Stirnflächen der Teile relativ zueinander durch Exzentermittel erstellt werden oder es erfolgen dafür zeitlich aufeinander abgestimmt, versetzte Linearbewegungen der Einspannteile.

Eine Bewegung eines Teiles wird gemäß GB-A-1324431 durch Überlagern von zwei geometrisch ähnlichen primären Bewegungen einer exzentrischen Rotation für ein Erstellen einer Reibschweißverbindung genutzt. Durch Verschieben der Phase einer primären Bewegung relativ zur zweiten erfolgt eine Einstellung oder Nullstellung der Exzentrizität, wobei zwei Planetengetriebe eingesetzt werden.

Ein Verfahren und eine Vorrichtung zum Reibschweißen von im Wesentlichen runden und tellerförmigen Teilen offenbart die US-A-3732613, wobei das Erwärmen zur Schaffung der Schweißbedingungen durch orbitale Bewegung eines Teiles erfolgt.

Auch für ein Verbinden von Rohren aus thermoplastischem Werkstoff kann nach US-B-6357506 durch Orbitalbewegung eines Teiles bei Anstellung an den weiteren erfolgen.

Insbesondere für eine Vielzahlfertigung von Schweißverbindungen an Teilen ist aus der GB-A-148/215 ein Verfahren bekannt geworden, welches zur Erwärmung der Reib- bzw. Schweißflächen eine orbitale gleichgerichtete Relativbewegung nutzt.

Das Ziel der Erfindung ist die Angabe eines gattungsgemäßen Verfahrens zum Reibschweißen von profilierten Stäben, insbesondere von Schienen aus härtbaren Stählen und Legierungen, mit welchem ein vollflächiges, homogenes, querschnittskonformes, metallisches Verbinden der Enden mit hoher Güte des Verbindungsbereiches erreicht werden kann.

Das Ziel der Erfindung wird bei einem Verfahren der eingangs genannten Art dadurch erreicht, dass die Teilenden mit planen achsnormalen Querschnittsflächen versehen werden und nachfolgend in einem Aufheizschritt die zu verbindenden Querschnittsflächen aneinander angedrückt, die Teilenden relativ zu den gegenüberliegenden achsabweichend kreisend um die Verbindungsachse bewegt und derart die Stimbereiche auf eine erhöhte Temperatur bzw. Verbindungstemperatur gebracht werden, worauf eine achsfluchtende Ausrichtung der Teile bei Bewegungsfreistellung derselben erfolgt und der Schweißbereich zur vollflächigen metallischen Bindung der Teilenden unter erhöhten Druck gesetzt wird.

Die Vorteile eines derart durchgeführten Schweißverfahrens liegen hauptsächlich darin, dass die Reibbewegung ohne Rotation der Teile erfolgt und daher keine hohen Massenkräfte bei einer Bewegungsänderung derselben entstehen. Die Teilenden aus härtbaren Stählen werden dabei unter Anpressdruck relativ zu den gegenüberliegenden in einer Richtung, die in der Querschnittsebene liegt, oszillierend bewegt. Nach Erreichen der Verbindungsparameter an den Reibflächen sind zur endseitigen Bewegungsfreistellung der Teile lediglich geringe Kräfte erforderlich, um eine querschnittskonforme Positionierung derselben vorzunehmen. Werden in günstiger Weise zur Reibungserwärmung die Teilenden bei elastischer Biegung des Teilendenbereiches in der Querschnittsebene bewegt, so führen oder helfen zumindest die Rückstellkräfte dazu, eine achsfluchtende Ausrichtung der Teile für den Stauchschlag einzurichten, wobei derart eine einzige hochwertige metallische Bindung erreicht werden kann.

Für einen weitgehend erschütterungsfreien Bewegungsablauf hat sich als günstig erwiesen, wenn zur Temperaturerhöhung der Stirnbereiche der Teile die Teilenden unter Druckbeaufschlagung mit einem jeweils zur Ausrichtungs- bzw. zur Verbindungsachse gegenüberilegenden Abstand um diese gleichsinnig kreisend bewegt werden.

Es können höchst wirkungvoll bei fehlenden Erschütterungen im System vollflächig gute Schweißverbindungen erstellt und die jeweiligen Bewegungen der Teilendenbereiche verringert werden. Damit sind auch die verfahrenstechnischen Aufwendungen für eine Bewegungsfreistellung der Teilenden reduziert.

Für eine im Verbindungsprozess vorgesehene achsfluchtende Ausrichtung von Teilen mit besonderen Querschnittsformaten, gefolgt von einem Verschweißen mit höchster Güte kann es vorteilhaft sein, wenn nach der unter aneinander Andrücken der Querschnittsflächen und achsabweichenden Bewegung der Teilenden zu deren Erwärmung die Andrückkraft verringert, eine Achsausrichtung der Teile durchgeführt und darauffolgend ein erhöhter Anpressdruck zur metallischen Verbindung derselben aufgebaut wird.

Teile, wie Schienen aus härtbaren Stählen und Legierungen, können bei einer Verbindungserstellung durch Reibschweißen im Schweißstoß und/oder in der wärmebeeinflussten Zone Bereiche mit ungünstiger, spröder Mikrostruktur aufweisen. Diese Struktur, zum Beispiel Martensitstruktur, bildet sich aus, wenn während der Schweißung der Werkstoff austenitisiert, das heißt in eine kubisch-flächenzentrierte Atomstruktur übergeführt wird und nach der Verbindung der Teile die Abkühlungsgeschwindigkeit, insbesondere eine Wärmeableitung in den Teil, so groß ist, dass die Gefügeumwandlung schlagartig diffusionslos erfolgt. Gemäß der Erfindung kann dieser Nachteil dadurch überwunden werden, dass vor dem Aufheizschritt eine Vorwärmung der Stimflächenbereiche der Teilenden erfolgt. Mit besonderem Vorteil kann eine Vorwärmung der Stimflächenbereiche der Teilenden durch relative Bewegung derselben zueinander mit verringertem Anstelldruck erfolgen, wobei dabei in günstiger Weise einerseits die Schweißeinrichtung für die Teilendenerwärmung genutzt und eine Oxidation der Schweißflächen verhindert werden kann.

Nachfolgend wird die Erfindung an Hand einer ein Ausführungsbeispiel darstellenden Zeichnung näher erläutert.

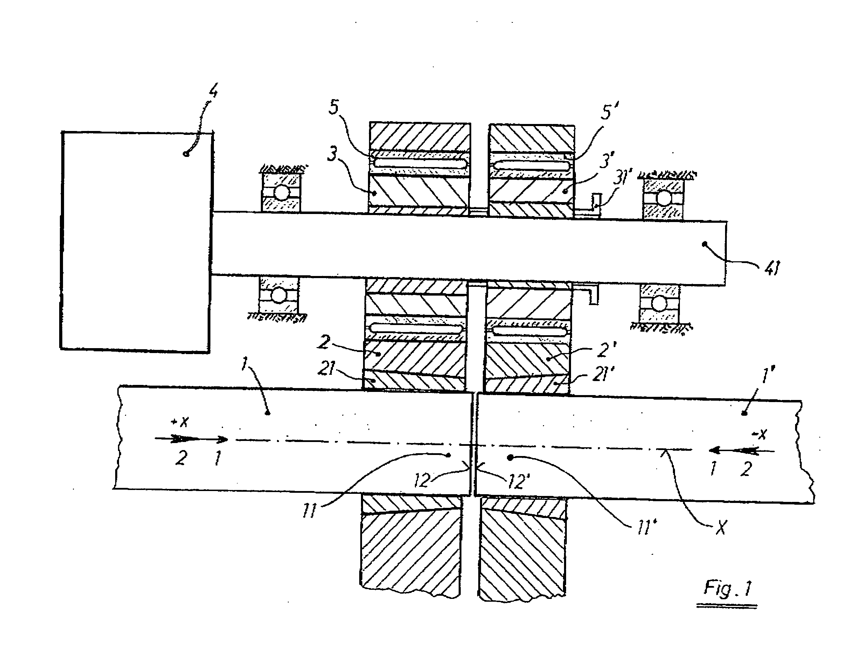

Die einzige Figur zeigt schematisch eine Reibschweißeinrichtung A.

Für zu verbindende Teile 1,1' sind Spannmittel 2,2' vorgesehen, welche durch Klemmteile 21,21' lösbar mit den Teilenden 11,11' verbunden sind. Die Spannmittel 2,2' sind mit mindestens jeweils einem einstellbaren Exzentermittel 3,3', welche mittels einer Welle 41 durch einen Motor 4 oder dergleichen antreibbar sind, wirkverbunden, wobei durch eine Steuerung 31,31' der Exzentermittel 3,3' ein Ausmaß an Exzentrizität einstellbar ist.

Werden nun über eine Welle 41 die Exzentermittel 3,3' durch einen Motor 4 drehend angetrieben und durch Steuermittel 31,31', deren Exzentrizität richtungsungleich, insbesonders gegengerichtet eingestellt, so erfolgt in Richtung zu den zu verschweißenden Teilenden 11,11' hin ein ungleiches, insbesondere gegengerichtetes Oszillieren der jeweiligen Exzenteroberflächen. Die Exzentermittel 3,3' stehen jedoch gegebenenfalls über Lager 5,5' mit den Spannmitteln 2,2' in Wirkverbindung, sodass diese, und in der Folge die in diesen eingespannten Teilenden 11,11', relativ zueinander bewegt werden. Eine weitere Lagerung (nicht dargestellt) der Spannmittel 2,2' kann durch Loslager oder durch gegebenenfalls mit gleicher Winkelgeschwindigkeit angetriebene Exzentermittel erfolgen.

Bei einer Durchführung eines Reibschweißverfahrens werden zu verbindende Teile 1,1' mit deren Teilenden 11,11' mit achsnormal planen Querschnittsflächen 12,12' in Spannmittel 2,2' durch Klemmteile 21,21' eingespannt und mit einer Kraft bzw. Gegenkraft +x1,-x1 aneinander angestellt. An den Teilquerschnittsflächen 12,12' erfolgt bei Wirkung einer Anstellkraft eine Relativ- bzw. Reibbewegung zwischen den gegenüberliegenden Teilenden 11,11' durch eine ungleiche achsabweichende Bewegung der Spannmittel 2,2'. Eine derartige Relativbewegung der Spannmittel 2,2' wird durch eine ungleiche Einstellung der Exzentrizität der mit diesen wirkverbundenen Exzentermittel 3, die auf einer Welle 41 vor einem Motor 4 angetrieben werden, verursacht.

Eine Relativbewegung bei Anstellung der Querschnittsflächen 12,12' aneinander setzt Reibungswärme frei, die die Querschnittsflächenbereiche auf eine Verbindungstemperatur anwärmt. Nach Erreichen einer derartigen Temperatur erfolgt durch eine Steuerung 31,31' unmittelbar und gleichzeitig eine Aufhebung der Exzentrizität der Exzentermittel 3,3', dadurch eine achsial ausgerichtete Bewegungsfreistellung der Teilenden mit einer nachgeordneten Druckbeaufschlagung +x2,-x2 der Querschnittsflächen 12,12'.

Nach einer Abkühlung der gebildeten Schweißzone der Teile, gegebenenfalls mit einer durch eine Vorwärmung der Teilenden 11,11' bewirkten verringerten Abkühlgeschwindigkeit zur Einstellung besonderer Materialeigenschaften in diesem Bereich, kann eine durch eine letzliche Druckbeaufschlagung bzw. einen Stauchschlag bewirkte Materialausquetschung mechanisch abgetragen und so eine profilkonforme Verbindung erstellt werden.

## Patentansprüche

1. Verfahren zum Verbinden von Teilen (1,1') mit großer Längserstreckung, insbesondere von Stäben mit profiliertem Querschnitt, wie Schienen oder dergleichen, aus härtbaren Stählen und Legierungen durch Reibschweißen, **dadurch gekennzeichnet, dass** die Teilenden (11,11') mit planen achsnormalen Querschnittsflächen (12,12') versehen werden und nachfolgend in einem Aufheizschritt die zu verbindenden Querschnittsflächen (12,12') aneinander angedrückt und die Teilenden relativ zu den gegenüberliegenden achsabweichend kreisend um die Verbindungsachse (X) bewegt und derart die Stirnbereiche auf eine erhöhte Temperatur bzw. Verbindungstemperatur gebracht werden, worauf eine achsfluchtende Ausrichtung der Teile (1,1') bei Bewegungsfreistellung derselben erfolgt und der Schweißbereich zur vollflächigen metallischen Bindung der Teilenden (11,11') unter erhöhten Druck gesetzt wird.

2. Verfahren nach Anspruch 1, **dadurch gekennzeichnet, dass** zur Temperaturerhöhung der Stimbereiche der Teile, die Teilenden mit einem jeweils zur Ausrichtungs- bzw. zur Verbindungsachse (X) gegenüberliegenden Abstand um diese gleichsinnig kreisend bewegt werden.

3. Verfahren nach einem der Ansprüche 1 oder 2, **dadurch gekennzeichnet, dass** nach der unter aneinander andrücken der Querschnittsflächen und achsabweichenden Bewegung der Teilenden zu deren Erwärmung die Andrückkraft verringert, eine Achsausrichtung der Teile durchgeführt und darauffolgend ein erhöhter Anpressdruck zur metallischen Verbindung derselben aufgebaut wird.

4. Verfahren nach einem der Ansprüche 1 bis 3, **dadurch gekennzeichnet, dass** vor dem Aufheizschritt eine Vorwärmung der Stimflächenbereiche der Teilenden erfolgt.

5. Verfahren nach Anspruch 4, **dadurch gekennzeichnet, dass** eine Vorwärmung der Stimflächenbereiche der Teilenden durch relative Bewegung derselben mit verringertem Anstelldruck erfolgt.

## Claims

1. A method for joining parts (1, 1') of a large longitudinal extension, particularly of bars having a shaped cross-section, such as rails or the like, of hardenable steels and alloys by friction welding, **characterised in that** the ends of the parts (11, 11') are provided with plane cross-sectional surfaces (12, 12') perpendicular to the axis, and that subsequently, in a heating-up step, the cross-sectional surfaces (12, 12') to be joined are pressed together, and the ends of the parts, in relation to the opposed one, are rotationally moved, while deviating from the axis, about the axis of joint (X), thus bringing the frontal areas to an elevated temperature or joint temperature, after which the parts are axially aligned putting them free of motion, and the welding area is set under an elevated pressure for a holohedral metallic bond of the ends of the parts (11, 11').

2. Method according to claim 1, **characterised in that** for increasing the temperature of said frontal areas of the parts, the ends of the parts, with an opposing distance each with respect to the orientation or joining axis (X), are rotationally moved in the same sense about said axis.

3. Method according to any of claims 1 or 2, **characterised in that,** after the movement of the ends of the parts deviating from the axis, while mutually pressing said frontal areas together and for heating, the pressure force is reduced, the axial alignment of the parts is carried out and subsequently an elevated contact pressure is built up for a metallic joint.

4. Method according to any of claims 1 to 3, **characterised in that** prior to said heating step, preheating of said frontal areas of the parts is effected.

5. Method according to claim 4, **characterised in that** preheating of said frontal areas of the parts is effected by a relative movement thereof applying a reduced contact pressure.

## Revendications

1. Procédé de jonction des parties (1, 1') d'une grande extension longitudinale, particulièrement des barres d'une section transversale profilée, comme des rails ou pareil, d'un acier durcissable et des alliages par un soudage par friction, **caractérisé en ce, que** les bouts des parties (11, 11') sont pourvus des superficies (12, 12') planes perpendiculaires à l'axe, et que l'on presse subséquemment, dans une étape d'échauffement, les superficies (12, 12') à joindre l'une contre l'autre et on meut les bouts des parties relativement à l'opposé d'une manière giratoire autour l'axe de jonction (X), tout en déviant de l'axe, ainsi amenant les zones frontales à une température ou température de jonction élevée, après quoi les parties (1, 1') sont alignées à l'axe, tout en les mettant libre de mouvement, et la zone de soudage est soumis à une pression élevée pour la jonction métallique des bouts des parties (11, 11') sur toute la surface.

2. Procédé selon la revendication 1, **caractérisé en ce, que**, pour une augmentation de température des zones frontales des parties, on meut les bouts des parties autour l'axe d'alignement ou de jonction (X) d'une manière giratoire en même sens avec un écartement opposé audit axe.

3. Procédé selon une quelconque des revendications 1 ou 2, **caractérisé en ce, qu**'après le mouvement des bouts des parties en déviant de l'axe, tout en pressant les superficies l'une contre l'autre pour les chauffer, la pression est réduite, les parties sont alignées à l'axe, et subséquemment on monte une pression élevée pour la jonction métallique de ceux-ci.

4. Procédé selon une quelconque des revendications 1 à 3, **caractérisé en ce, qu**'avant l'étape de chauffage, un chauffage préalable des zones des surfaces frontales des bouts des parties est effectué.

5. Procédé selon la revendication 4, **caractérisé en ce, qu**'un chauffage préalable des zones des surfaces frontales des bouts des parties est effectué par un mouvement relatif de ceux-ci avec une pression d'appui réduite.
